# FASCICULE DE BREVET EUROPEEN

(11) **EP 2 897 095 B1**
(45) Date de publication et mention de la délivrance du brevet: **11.07.2018**
(21) Numéro de dépôt: 15151047.6
(22) Date de dépôt: 14.01.2015
(51) Int. Cl.: G06Q 20/34

(54) **Procédé de sécurisation d'une transaction réalisée par carte bancaire**
Sicherungsverfahren einer mit einer Bankkarte durchgeführten Transaktion
Method for securing a transaction conducted by bank card

(30) Priorité: 16.01.2014 FR 1450356
(43) Date de publication de la demande: 22.07.2015
(73) Titulaire: Ingenico Group, 75015 Paris (FR)
(72) Inventeur: Leger, Michel, 78100 Saint-Germain-En-Laye (FR)
(74) Mandataire: Vidon Brevets & Stratégie

(56) Documents cités:
- WO-A2-2010/025440
- US-A- 5 517 558
- US-A1- 2012 330 765
- US-B1- 6 292 782
- US-B1- 6 356 868

## Description

### 1. Domaine de l'invention

L'invention se rapporter au domaine de la sécurisation de transaction réalisées par carte bancaire. Plus particulièrement, la technique proposée permet d'améliorer la sécurisation de transactions réalisées par un utilisateur lors de l'utilisation de sa carte (par exemple à l'aide d'un smartphone, d'une tablette, d'un ordinateur).

### 2. Art antérieur

Depuis de nombreuses années, la carte bancaire a supplanté, en termes de volume transactionnel, les moyens de paiement classiques que sont les espèces ou les chèques. La carte bancaire, de par son utilisation massive, est le support de paiement privilégié des achats à distance, qu'ils soient faits en ligne, sur des plateformes de paiement, ou par téléphone.

De nombreuses méthodes ont été mise en oeuvre pour sécuriser l'utilisation des cartes bancaires dans le cadre de paiement à distance : des méthodes de chiffrement; l'intégration, dans les données de carte à fournir, d'un trigramme visuel;
Il n'empêche que ces méthodes, pour la plupart, ne permettent pas de vérifier l'identité de la personne qui utilise les données de carte bancaire (que ce soit en ligne ou par téléphone). En effet, derrière un écran ou derrière un combiné téléphonique, il est très difficile de vérifier que la personne qui fournit les données de la carte est réellement le titulaire de celle-ci.

Bien entendu, des méthodes de localisation de transaction ont été proposées. De telles méthodes permettent d'obtenir une zone géographique dans laquelle la transaction est effectuée : par exemple lorsque la transaction est effectuée en ligne, par l'intermédiaire d'un ordinateur, d'une tablette, des méthodes ont été proposées pour localiser physiquement l'ordinateur ou le terminal depuis lequel la transaction est réalisée. Ces méthodes permettent ainsi de détecter des transactions frauduleuses en détectant une différence de pays par exemple, entre l'endroit où se situe le terminal et l'endroit habituel de résidence du titulaire de la carte bancaire. De telles techniques ont également été proposées pour les terminaux mobiles (les téléphones ou les smartphones) : on détecte la présence du terminal de communication dans une zone géographique donnée pour tenter de détecter une utilisation frauduleuse.

Ces techniques permettent effectivement de répondre à certaines tentatives de fraudes, principalement en provenance de pays étrangers. En revanche, ces techniques ne permettent pas de contrer des fraudes qui se situent dans une zone géographique proche de la zone géographique habituelle d'utilisation des données de la carte bancaire. Typiquement, les techniques de l'art antérieur ne permettent pas de détecter l'utilisation inappropriée, par une personne de la famille ou de l'entourage proche du titulaire, des données de carte bancaires appartenant à ce titulaire.

Ainsi, globalement, les méthodes actuelles sont inefficaces pour détecter une fraude "locale". Par ailleurs, les méthodes actuelles sont également globalement peu efficaces pour détecter des fraudes par téléphone, c'est à dire lorsqu'un utilisateur fournit des données de carte bancaire à un opérateur téléphonique.

Il existe donc un besoin de fournir une méthode qui permette d'identifier qu'un auteur d'une transaction à distance impliquant la fourniture de données de cartes bancaires est le titulaire de la carte bancaire utilisée. Le document US6356868 décrit un système de contrôle d'accès à des ressources protégées (des ordinateurs, des bâtiments, des données bancaires, etc.). Ce système de contrôle repose sur une authentification biométrique vocale d'un utilisateur. Préalablement à l'utilisation de ce système, chaque utilisateur potentiellement autorisé à accéder à tout ou partie de ces ressources protégées a été invité à choisir un mot de passe (ou une phrase clé), qu'il a prononcé à voix haute afin de permettre au système d'établir et d'enregistrer une signature vocale pour cet utilisateur. L'ensemble des signatures vocales de tous les utilisateurs est stocké dans une base de données du système.

Le document US5517558 décrit un système permettant à un utilisateur de s'authentifier par voie téléphonique afin d'être autorisé à accéder à certains services. Afin de réaliser cette authentification - qui repose sur une analyse de sa voix - l'utilisateur est invité à épeler au téléphone une chaîne de caractères (qui peut être vue comme un mot de passe). Deux phases sont alors mises en oeuvre :
- une première phase de reconnaissance vocale des caractères épelés (« ce qui a été dit ») : lorsque tous les caractères constituant la chaîne de caractères ont été reconnus, le système est à même de vérifier la validité de cette chaîne de caractères ;
- une deuxième phase d'authentification biométrique vocale (« qui l'a dit ») afin de déterminer si la chaîne de caractères a bien été prononcée par l'utilisateur légitime : cette phase repose sur une comparaison de la voix de l'appelant avec une signature vocale préalablement enregistrée dans le système pour cet utilisateur et cette chaîne de caractères.

La première phase permet au système de savoir qui l'appelant prétend être (phase d'identification) tandis que la deuxième phase permet de vérifier cette identité (phase d'authentification).

### 3. Résumé de l'invention

La technique proposée ne présente pas ces inconvénients de l'art antérieur. La technique proposée permet de sécuriser l'utilisation des données de carte lors de paiement réalisés à distance, que ce soit en ligne, par l'intermédiaire d'un site web, ou par téléphone, en contact avec un opérateur humain. La technique se rapporte à un procédé de sécurisation d'une transaction réalisée par carte bancaire selon la revendication 1.Ainsi, en plus de la signature vocale, on dispose d'un élément de comparaison supplémentaire permettant d'identifier l'utilisateur des données de carte bancaire. La sécurisation de la transaction est donc encore renforcée.

Ainsi, la comparaison du numéro de téléphone intervient en tant que critère de comparaison secondaire permettant d'identifier l'utilisateur des données de carte bancaire.

Selon un mode de réalisation particulier, ladite étape d'obtention dudit échantillon sonore est mise en oeuvre de manière concomitante avec ladite étape d'obtention desdites données textuelles, lorsque lesdites données textuelles sont communiquées par voie téléphonique.

Ainsi, il n'est pas nécessaire de faire répéter plusieurs fois les données nécessaires à la transaction à l'utilisateur.

Selon un mode de réalisation particulier, ladite étape d'obtention dudit échantillon sonore et ladite étape de calcul de ladite signature vocale courantes sont mise en oeuvre par l'intermédiaire d'un terminal de communication en possession dudit utilisateur.

Selon un mode de réalisation particulier, le procédé comprend alors les étapes suivantes :
- réception, par le terminal de communication, d'une requête de transmission en provenance d'un serveur de gestion de transaction;
- affichage, par le terminal de communication, d'une demande de saisie d'un code d'identification personnel,
- saisie, par l'utilisateur, du code d'identification personnel, et
- lorsque le code d'identification personnel est correct, transmission de la signature vocale courante au serveur de gestion.

Ainsi, l'utilisateur légitime des données de carte bancaire n'est pas obligé d'épeler celles-ci à haute voix. La confidentialité des transactions réalisées dans un lieu public est ainsi conservée.

Dans un autre mode de réalisation, la technique se rapporte également à un serveur de contrôle d'une validité d'une transaction selon la revendication 5.

Selon une implémentation préférée, les différentes étapes des procédés selon l'invention sont mises en oeuvre par un ou plusieurs logiciels ou programmes d'ordinateur, comprenant des instructions logicielles destinées à être exécutées par un processeur de données d'un module relais selon l'invention et étant conçu pour commander l'exécution des différentes étapes des procédés.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en oeuvre ses propres modules logiciels.

Les différents modes de réalisation mentionnés ci-dessus sont combinables entre eux pour la mise en oeuvre de l'invention.

### 4. Figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un synoptique de la technique proposée pour la transmission de données ;
- la figure 2 présente un synoptique de la technique proposée entre un terminal et un serveur de gestion ;
- la figure 3 décrit la fourniture, par un terminal de communication, d'une signature vocale courante préenregistrée ;
- la figure 4 illustre schématiquement les composants d'un serveur de gestion pour la mise en oeuvre de la technique proposée.

### 5. Description détaillée

### 5.1. Rappel du principe

Le principe général de la méthode proposée consiste à faire épeler au moins certaines des données de la carte bancaire, par l'utilisateur, au moment de la transaction. L'avantage immédiat obtenu par cette technique est évident lorsque la transaction est menée par téléphone : faire épeler ces données ne nécessite aucune action complémentaire ni de la part de l'utilisateur ni de la part de l'opérateur car l'utilisateur est obligé d'épeler ces données pour réaliser une transaction.

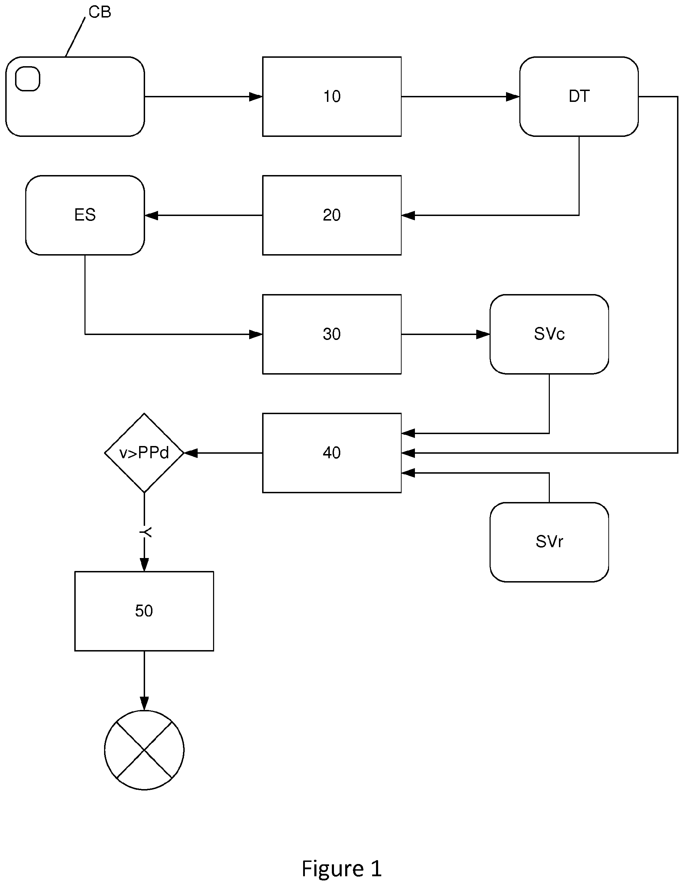

Les inventeurs ont mis en oeuvre une technique permettant de tirer parti de cette situation. Typiquement, la technique mise en oeuvre comprend les étapes suivantes, décrites en relation avec la figure 1, qui se déroulent moment du paiement :
- une étape d'obtention (10) de données figurant sur la carte bancaire à utiliser (CB), dites données textuelles (DT) ;
- une étape d'obtention (20), d'au moins une portion des données textuelles (DT) sous la forme d'un flux de données audio, appelé échantillon sonore (ES), résultant de la lecture des données figurant sur la carte bancaire à utiliser (CB) ;
- une étape de calcul (30) d'une signature vocale courante (SVc) à partir dudit échantillon sonore (ES);
- une étape de comparaison (40) de ladite signature vocale courante (SVc) avec une signature vocale de référence (SVr) préalablement enregistrée et associée auxdites données textuelles (DT) de la carte bancaire ; et
- lorsque la signature vocale de référence (SVr) diffère de la signature vocale courante (SVc) d'une valeur supérieure à une première valeur définie par un paramètre prédéterminé (PPd), une étape de rejet (50) de la transaction.

La technique proposée comprend également une comparaison complémentaire de numéros de téléphone en cas de doute sur l'authenticité de la signature vocale courante. Cet aspect est décrit ultérieurement.

Bien entendu, la signature de référence et la signature vocale courante correspondent à des portions de texte lu qui sont identiques. Ces portions de texte lus peuvent correspondre à l'ensemble de données textuelles ou à certaines d'entre elles (par exemple seulement le numéro de la carte bancaire, ou seulement le cryptogramme visuel). Ainsi, la technique proposée permet d'assurer une fiabilité importante de la transaction. En effet, la probabilité que l'utilisateur puisse reproduire la voix du titulaire de la carte est relativement faible. Typiquement, ce cas peut se produire lorsque l'utilisateur est enregistré, à son insu, et qu'il réalise un achat en utilisant la technique proposée. Cependant, pour obtenir un enregistrement de bonne qualité, un fraudeur doit alors se trouver dans des conditions d'enregistrement particulières : un environnement non bruyant, être proche de l'utilisateur. Or, la plupart du temps les achats à distances nécessitant l'utilisation des données de carte bancaire est réalisée chez le titulaire de la carte lui-même ou sur le lieu de travail de celui-ci. Il est dès lors très difficile de "pirater" ce type de lieu pour reproduire les conditions d'enregistrement frauduleuses précitées (c'est-à-dire des conditions idéales). Ainsi, la probabilité que la voix du titulaire de la carte soit piratée au moment où il épelle les numéros de carte est proche de zéro. Par ailleurs, dans une situation où le paiement serait effectué par téléphone, l'opérateur serait immédiatement informé d'un changement de voix : entre la voix du fraudeur ayant effectué la commande de bien ou de service et celle utilisée pour épeler les informations de la carte bancaire, une différence alerterait immédiatement l'opérateur qui pourrait alors annuler la transaction.

La technique proposée peut être mise en oeuvre de différentes manières. Plus particulièrement, comme exposé dans l'avant dernière étape de la méthode présentée précédemment, cette technique nécessite l'utilisation d'une signature vocale de référence (SVr). Cette signature vocale de référence (SVr) est nécessaire à la mise en oeuvre de la technique. Elle peut être acquise de plusieurs manières différentes. Il est par exemple possible de l'acquérir lors de l'ouverture d'un compte bancaire dans un établissement bancaire. Une ouverture de compte bancaire nécessite souvent la présence physique du futur titulaire de la carte bancaire. Il est possible de réaliser un enregistrement de la voix de celui-ci à cette occasion. Il est également envisageable d'obtenir une telle signature lors de la première utilisation de la carte bancaire. Les établissements qui fournissent les cartes bancaires mettent souvent en oeuvre une procédure spécifique pour la première utilisation. Il est possible de prévoir que cette procédure puisse comprendre une étape d'enregistrement de la voix du titulaire et la création d'une signature vocale de référence (SVr) à partir de celle-ci. Enfin, dans un autre mode de réalisation, il est possible d'obtenir cette signature à partir d'un enregistrement en ligne, par l'intermédiaire d'un service web spécifiquement dédié à cet effet et disponible sur le site sécurisé de l'établissement bancaire. Une autre technique consiste également à faire lire les informations de la carte bancaire du titulaire sur un serveur vocal dédié. Ce serveur vocal génère alors la signature en fonction de la voie qui est lue. De manière complémentaire, lors de l'appel de l'utilisateur sur ce serveur vocal, le numéro de téléphone appelant est enregistré concomitamment à la signature. Ce numéro de téléphone peut alors, dans certains modes de réalisations, être utilisé pour vérifier qu'il concorde avec le numéro de téléphone avec lequel une transaction est réalisée.

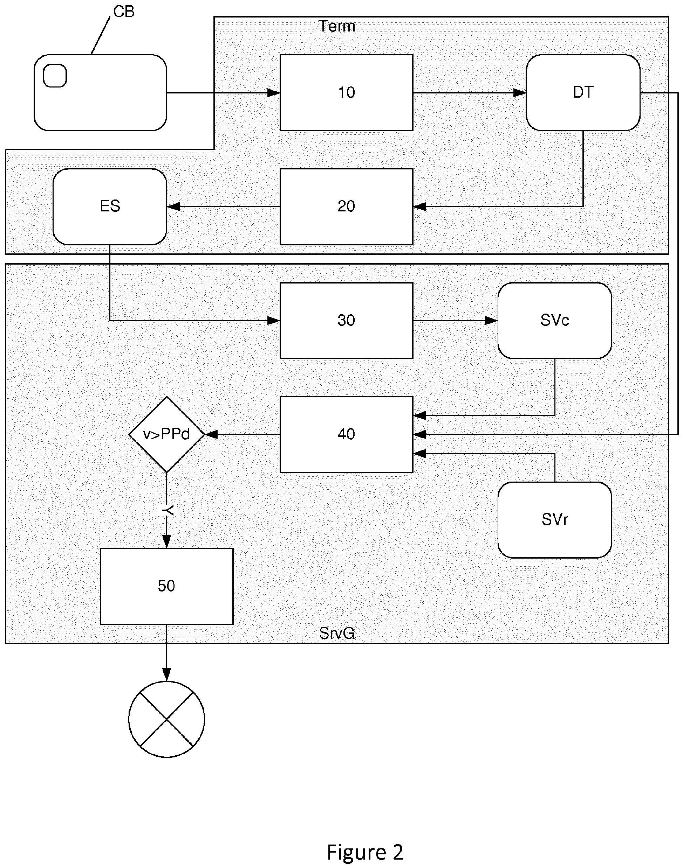

Dans un mode de réalisation particulier, décrit en relation avec la figure 2, la technique proposée est mise en oeuvre par l'intermédiaire d'un serveur de gestion (SrvG) de transactions bancaire. Dans ce mode de réalisation, préalablement à l'acceptation de la transaction, le serveur de gestion (SrvG) met en oeuvre une étape de comparaison (40) de la signature vocale de référence (SVr) avec la signature vocale courante (SVc). La signature vocale courante (SVc) peut être calculée (30) par le serveur de gestion (SrvG) lui-même : le serveur de gestion (SrvG) reçoit (20) alors l'échantillon sonore (ES) en sus de la réception (10) des données textuelles (DT) de la carte bancaire. La signature vocale courante (SVc) peut alternativement être calculée (30) sur un terminal (Term) connecté au serveur de gestion (SrvG) : dans ce cas, c'est directement la signature vocale courante (SVc) qui est transmise (20) en sus des données textuelles (DT) de la carte bancaire.

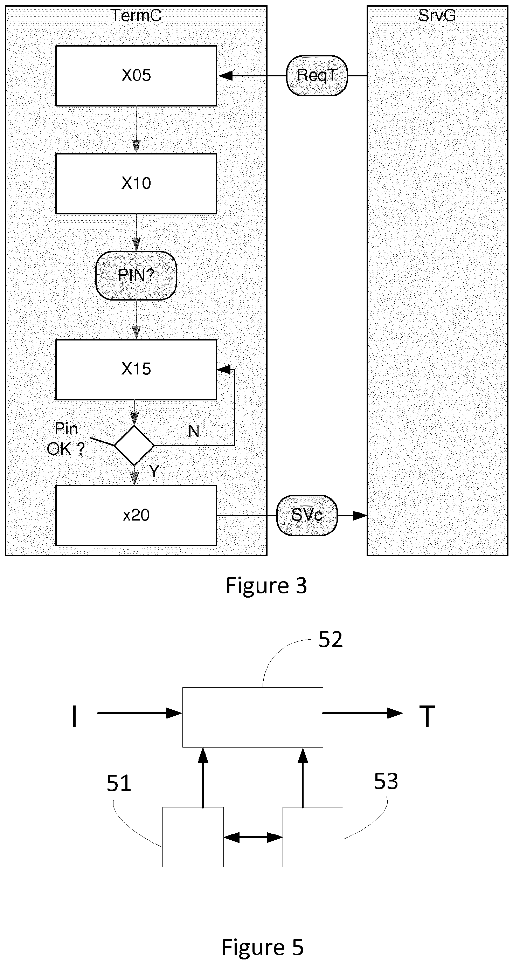

Dans un mode de réalisation particulier, décrit en relation avec la figure 3, la technique proposée est astucieusement mise en oeuvre par l'intermédiaire d'un terminal, comme par exemple un terminal de communication (TermC) mobile de type smartphone, dont dispose le titulaire de la carte. Dans ce mode de réalisation, une application particulière est en charge de la conservation, dans un espace mémoire sécurisé, d'une signature vocale, jouant le rôle de signature vocale courante (SVc), associée au titulaire de la carte. Cette signature vocale courante (SVc) a par exemple été générée à partir de la voix du titulaire de la carte postérieurement à l'installation d'une application particulière sur le terminal de communication (TermC) (application de type android, ios ou windows phone), application qui permet la mise en oeuvre, du côté du terminal, de la technique décrite.

Dans ce mode de réalisation, la signature vocale courante (SVc), qui est enregistrée au sein d'un terminal de communication (TermC), est transmise (X20), au moment de la saisie ou de la fourniture des données textuelles (DT) de la carte bancaire. Cette transmission (X20) de la signature peut être réalisée directement au serveur de gestion (SrvG) de transaction bancaire préalablement présenté. Dans ce mode de réalisation, par exemple, ce serveur de gestion (SrvG) reçoit ainsi les données de la carte bancaire en provenance du fournisseur de produits et/ou de services (éventuellement, par l'intermédiaire d'un serveur transactionnel, qui se trouve en coupure du serveur de gestion), tandis que la signature vocale courante (SVc) est transmise (X20) directement, depuis le terminal de l'utilisateur, vers le serveur de gestion (SrvG) de transaction bancaire (éventuellement, par l'intermédiaire d'un serveur transactionnel, qui se trouve en coupure du serveur de gestion). L'avantage de ce mode de réalisation est que le titulaire de la carte (ou l'utilisateur), n'a pas besoin de s'exprimer à voix haute pour épeler ses identifiants bancaires. Ce mode de réalisation est particulièrement adapté à l'achat de bien et de services par l'intermédiaire d'un site web par exemple. Le procédé comprend alors les étapes complémentaires suivantes :
- réception (X05), par le terminal de communication (termC), d'une requête (ReqT) de transmission en provenance du serveur de gestion (SrvG) (ou du serveur transactionnel);
- affichage, (X10) par le terminal de communication (termC), d'une demande de saisie d'un code d'identification personnel (PIN),
- saisie (X15), par l'utilisateur, du code d'identification personnel (PIN), et
- lorsque le code d'identification personnel est correct, transmission (X20) de la signature vocale courante (SVc) au serveur de gestion (SrvG).

Ainsi, préalablement à la transmission de la signature, l'utilisateur doit faire la preuve qu'il est en possession d'une donnée de déblocage, comme un code d'identification personnel, ce qui prémunit d'une utilisation frauduleuse du terminal en cas de vol de celui-ci concomitamment au vol de la carte bancaire elle-même. Il faut bien faire la différence entre cette technique et d'autres qui peuvent nécessiter la saisie d'un code d'identification personnel sur un terminal de communication (TermC) mobile. L'objet de cette saisie, dans le cadre de la présente technique, n'est pas d'autoriser la transaction, mais de permettre la transmission de la signature vocale courante (SVc) vers le serveur. Ceci est significativement différent car c'est bien le serveur de gestion, in fine, qui accepte ou non la transaction. La saisie du code d'identification personnel par l'utilisateur du terminal de communication (TermC) ne vaut pas acceptation de la transaction. Cette saisie permet juste de débloquer la transmission de la signature vocale courante (SVc) vers le serveur.

### 5.1. Description d'un mode de réalisation

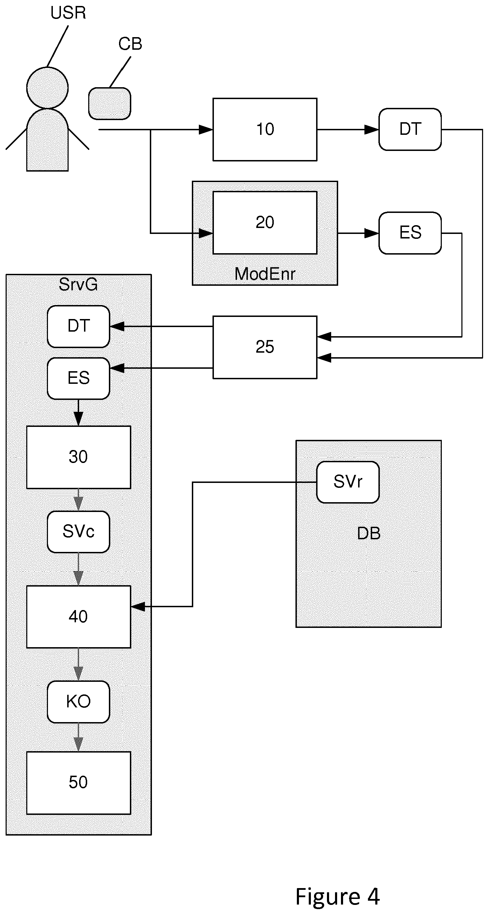

Dans un mode de réalisation de la technique proposée, décrit en relation avec la figure 4, une signature est préalablement créée par l'intermédiaire d'un accès du titulaire de la carte bancaire à un serveur vocal. Cet accès est réalisé à réception de la carte bancaire, préalablement à sa première utilisation. La titulaire de la carte reçoit la carte et appelle un numéro de téléphone particulier. Lors de cet appel, le serveur vocal requiert d'une part la saisie, par le titulaire de la carte, d'au moins une donnée d'identification de cette carte (par exemple le numéro) et d'autre part une donnée de déblocage (par exemple le code PIN de la carte). Lorsque ces données ont été saisies, le serveur vocal demande au titulaire d'épeler les données figurant sur la carte (par exemple le nom et le prénom du titulaire, le numéro de la carte, sa date d'expiration et le code de sécurité à trois chiffres). Le serveur vocal enregistre le titulaire de la carte lorsque celui-ci épèle les données de cette carte. À l'aide du flux audio enregistré, le serveur vocal met en oeuvre un module de génération de signature qui permet d'obtenir une signature vocale de référence (SVr) de la voix du titulaire.

Lors de l'utilisation de la carte bancaire, par exemple pour réaliser un achat par téléphone, la méthode décrite précédemment est mise en oeuvre, postérieurement à la désignation, par l'utilisateur, des biens ou services à acheter :
- une étape de lecture, par l'utilisateur, des données nécessaires figurant sur la carte bancaire à utiliser (CB), faisant office d'obtention (10) des données (DT) figurant sur la carte bancaire à utiliser (CB) pour réaliser le paiement ;
- une étape d'obtention (20), par un module d'enregistrement (ModENr), au fur et à mesure de la lecture par l'utilisateur, des données épelées sous la forme d'un flux de données audio, délivrant l'échantillon sonore (ES) ;
- une étape de transmission (25) dudit échantillon sonore (ES) et des données textuelles à un serveur de gestion (ServG).
- une étape de calcul (30) d'une signature vocale courante (SVc) à partir dudit échantillon;
- une étape de comparaison (40) de ladite signature avec une signature vocale de référence (SVr) préalablement enregistrée au sein d'une base de données (DB) et associée auxdites données de la carte bancaire; et
- lorsque la signature vocale de référence (SVr) est significativement différente de la signature vocale courante (SVc), une étape de rejet (50) de la transaction.

De manière complémentaire, l'opérateur téléphonique auquel les données de la carte ont été épelées peut être informé de la nature du rejet (i.e. défaut d'authentification du titulaire).

Outre une comparaison entre la signature vocale de référence (SVr) et la signature vocale courante (SVc), il est également proposé de comparer des numéros de téléphones : en effet, lors de la création de son compte bancaire, le client indique généralement un ou plusieurs numéros de téléphone servant de contact avec sa banque ou son fournisseur de services de paiement. Le numéro de téléphone de l'utilisateur appelant est également comparé avec les numéros de téléphone de référence à la disposition de la banque.

Au moment du passage de commande, une comparaison supplémentaire est mise en oeuvre. Cette comparaison supplémentaire, qui n'a pas un degré d'importance aussi élevé que celui de la signature vocale de référence, peut toutefois être prise en compte en cas de doute sur l'authenticité de la signature vocale courante. En effet, la comparaison des signatures vocales est nécessairement une comparaison statistique et/ou probabiliste. Or une telle comparaison de signature peut entrainer des taux d'erreurs importants. Comme il est peu envisageable de refuser toutes les transactions bancaires au motif que la comparaison des signatures se situe sous un seuil de comparaison déterminé (par exemple sous le seuil des 90%), la comparaison complémentaire des numéros de téléphone permet de lever un doute quant à l'identité du locuteur.

Ainsi, par exemple, lorsque le pourcentage d'identité des signatures est compris entre 80 et 95 %, le numéro de téléphone de l'appelant sert de facteur de décision secondaire pour accepter ou non la transaction : si le numéro de l'appelant ne fait pas partie de la liste des numéros de référence, la transaction sera refusée.

Ceci permet d'augmenter encore la sécurisation des paiements à distance.

### 5.2. Serveur de gestion

On décrit, en relation avec la figure 5, un serveur de gestion (SrvG) mis en oeuvre pour contrôler la validité d'une transaction, du point de vue du serveur de gestion (SrvG), selon le procédé décrit préalablement.

Par exemple, le serveur de gestion (SrvG) comprend une mémoire 51 constituée d'une mémoire tampon, une unité de traitement 52, équipée par exemple d'un microprocesseur, et pilotée par le programme d'ordinateur 53, mettant en oeuvre un procédé contrôle de validité.

À l'initialisation, les instructions de code du programme d'ordinateur 53 sont par exemple chargées dans une mémoire avant d'être exécutées par le processeur de l'unité de traitement 52. L'unité de traitement 52 reçoit en entrée au moins une donnée textuelle et une donnée représentative d'un échantillon. Le microprocesseur de l'unité de traitement 52 met en oeuvre les étapes du procédé de contrôle de la validité, selon les instructions du programme d'ordinateur 53.

Pour cela, le serveur de gestion (SrvG) comprend, outre la mémoire tampon 51, des moyens de communications, tels que des modules de communication réseau, des moyens de transmission de donnée et éventuellement un processeur de chiffrement.

Ces moyens peuvent se présenter sous la forme d'un processeur particulier implémenté au sein du serveur de gestion (SrvG), ledit processeur étant un processeur sécurisé. Selon un mode de réalisation particulier, ce serveur de gestion (SrvG) met en oeuvre une application particulière qui est en charge de la réception et du décodage des données, cette application étant par exemple fournie par le fabricant du processeur en question afin de permettre l'utilisation dudit processeur. Pour ce faire, le processeur comprend des moyens d'identification uniques. Ces moyens d'identification uniques permettent d'assurer l'authenticité du processeur.

Par ailleurs, le serveur de gestion (SrvG) comprend en outre les moyens de génération de signatures vocales et/ou des moyens de comparaison de signatures vocales. Ces moyens se présentent également comme des interfaces de communications permettant d'échanger des données sur des réseaux de communication, des moyens d'interrogations et de mise à jour de base de données, des moyens de comparaisons de données. Ces différents moyens peuvent, en fonction des modes de réalisation, se présenter sous forme logicielle ou sous forme matérielle, par exemple sous forme de processeurs particuliers. Ceci peut par exemple être le cas des moyens de génération et de comparaison de signature vocales, qui pour des raisons de performances peuvent être des processeurs dédiés spécifiquement à cette tâche.

## Revendications

1. Procédé de sécurisation d'une transaction réalisée par carte bancaire, transaction impliquant la fourniture, à distance, par un utilisateur, de données figurant sur une carte bancaire en sa possession, ledit procédé comprenant :
- une étape d'obtention (10) de données figurant sur la carte bancaire à utiliser (CB), dites données textuelles (DT) ;
- une étape d'obtention (20) d'au moins une portion des données textuelles (DT) sous la forme d'un flux de données audio, appelé échantillon sonore (ES), résultant de la lecture des données figurant sur la carte bancaire à utiliser (CB) ;
- une étape de calcul (30) d'une signature vocale courante à partir dudit échantillon sonore (ES);
- une étape d'obtention d'un numéro de téléphone utilisé pour la fourniture à distance, des données textuelles (DT), dit numéro de téléphone courant ;
- une étape de comparaison (40) de ladite signature vocale courante avec une signature vocale de référence préalablement enregistrée et associée auxdites données textuelles (DT) de la carte bancaire ; et
- lorsque la signature vocale de référence (SVr) diffère de la signature vocale courante (SVc) d'une valeur supérieure à une première valeur définie par un paramètre prédéterminé (PPd), une étape de rejet (50) de la transaction ;
- lorsque la signature vocale de référence (SVr) diffère de la signature vocale courante (SVc) d'une valeur supérieure à une deuxième valeur définie par le paramètre prédéterminé (PPd) :
- une étape de comparaison du numéro de téléphone courant avec au moins un numéro de téléphone de référence préalablement enregistré et associé auxdites données textuelles (DT) de la carte bancaire ; et
- lorsque le numéro de téléphone courant n'est pas identique à un des numéros de téléphone de référence, une étape de rejet de la transaction.

2. Procédé selon la revendication 1, **caractérisé en ce que** ladite étape d'obtention dudit échantillon sonore est mise en oeuvre de manière concomitante avec ladite étape d'obtention desdites données textuelles.

3. Procédé selon la revendication 1, **caractérisé en ce que** ladite étape d'obtention dudit échantillon sonore et ladite étape de calcul de ladite signature vocale courantes sont mise en oeuvre par l'intermédiaire d'un terminal de communication (TermC) en possession dudit utilisateur.

4. Procédé selon la revendication 3, **caractérisé en ce qu'**il comprend en outre les étapes suivantes :
- réception (X05), par le terminal de communication (termC), d'une requête de transmission en provenance d'un serveur de gestion (SrvG) de transaction;
- affichage, (X10) par le terminal de communication (termC), d'une demande de saisie d'un code d'identification personnel (PIN),
- saisie (X15), par l'utilisateur, du code d'identification personnel (PIN), et
- lorsque le code d'identification personnel est correct, transmission (X20) de la signature vocale courante (SVc) au serveur de gestion (SrvG).

5. Serveur de contrôle d'une validité d'une transaction impliquant la fourniture, à distance, par voie téléphonique, par un utilisateur, de données figurant sur une carte bancaire, ledit serveur comprenant :
- des moyens d'obtention de données figurant sur la carte bancaire à utiliser (CB), dites données textuelles (DT) ;
- des moyens d'obtention d'au moins une portion des données textuelles (DT) sous la forme d'un flux de données audio, appelé échantillon sonore (ES), résultant de la lecture des données figurant sur la carte bancaire à utiliser (CB) ;
- des moyens de calcul d'une signature vocale courante (SVc) à partir dudit échantillon sonore (ES) ;
- des moyens d'obtention d'un numéro de téléphone utilisé pour la fourniture à distance des données textuelles (DT), dit numéro de téléphone courant ;
- des moyens de comparaison de ladite signature vocale courante avec une signature vocale de référence préalablement enregistrée et associée auxdites données textuelles (DT) de la carte bancaire ; et
- lorsque la signature vocale de référence (SVr) diffère de la signature vocale courante d'une valeur supérieure à une première valeur définie par un paramètre prédéterminé (PPd), des moyens de rejet de la transaction ;
- lorsque la signature vocale de référence (SVr) diffère de la signature vocale courante (SVc) d'une valeur supérieure à une deuxième valeur définie par le paramètre prédéterminé (PPd) :
- des moyens de comparaison du numéro de téléphone courant avec au moins un numéro de téléphone de référence préalablement enregistré et associé auxdites données textuelles (DT) de la carte bancaire ; et
- lorsque le numéro de téléphone courant n'est pas identique à un des numéros de téléphone de référence, des moyens de rejet de la transaction.

6. Produit programme d'ordinateur téléchargeable depuis un réseau de communication et/ou stocké sur un support lisible par ordinateur et/ou exécutable par un microprocesseur, ledit produit programme d'ordinateur comprenant des instructions de code de programme pour l'exécution d'un procédé de contrôle selon la revendication 1, lorsqu'il est exécuté sur un ordinateur.

## Patentansprüche

1. Sicherungsverfahren einer Transaktion, die mit einer Bankkarte durchgeführt wird, Transaktion, die die Fernbereitstellung durch einen Benutzer von Daten, die auf einer Bankkarte enthalten sind, die sich in seinem Besitz befindet, umfasst, wobei das Verfahren aufweist:
- einen Schritt des Erhaltens (10) von Daten, die auf der zu verwendenden Bankkarte (CB) enthalten sind, die Textdaten (DT) genannt werden,
- einen Schritt des Erhaltens (20) von mindestens einem Abschnitt der Textdaten (DT) in Form von einem Audiodatenstrom, der Tonmuster (ES) genannt wird, der sich aus dem Auslesen der Daten ergibt, die auf der zu verwendenden Bankkarte (CB) enthalten sind,
- einen Schritt des Berechnens (30) einer aktuellen Sprachsignatur ausgehend von dem Tonmuster (ES),
- einen Schritt des Erhaltens einer Telefonnummer, die für die Fernbereitstellung der Textdaten (DT) verwendet wird, die aktuelle Telefonnummer genannt wird,
- einen Schritt des Vergleichens (40) der aktuellen Sprachsignatur mit einer Referenz-Sprachsignatur, die zuvor aufgezeichnet wird und den Textdaten (DT) der Bankkarte zugeordnet wird, und,
- wenn sich die Referenz-Sprachsignatur (SVr) von der aktuellen Sprachsignatur (SVc) um einen Wert unterscheidet, der größer als ein erster Wert ist, der durch den vorbestimmten Parameter (PPd) definiert wird, einen Schritt des Ablehnens (50) der Transaktion,
- wenn sich die Referenz-Sprachsignatur (SVr) von der aktuellen Sprachsignatur (SVc) um einen Wert unterscheidet, der größer als ein zweiter Wert ist, der durch einen vorbestimmten Parameter (PPd) definiert wird:
- einen Schritt des Vergleichens der aktuellen Telefonnummer mit mindestens einer Referenztelefonnummer, die zuvor aufgezeichnet wird und den Textdaten (DT) der Bankkarte zugeordnet wird, und,
- wenn die aktuelle Telefonnummer nicht mit mindestens einer der Referenztelefonnummern identisch ist, einen Schritt des Ablehnens der Transaktion.

2. Verfahren nach Anspruch 1, **dadurch gekennzeichnet, dass** der Schritt des Erhaltens des Tonmusters gleichzeitig mit dem Schritt des Erhaltens der Textdaten umgesetzt wird.

3. Verfahren nach Anspruch 1, **dadurch gekennzeichnet, dass** der Schritt des Erhaltens des Tonmusters und der Schritt des Berechnens der aktuellen Sprachsignatur durch ein Kommunikationsendgerät (TermC), das sich im Besitz des Benutzers befindet, umgesetzt werden.

4. Verfahren nach Anspruch 3, **dadurch gekennzeichnet, dass** es ferner die folgenden Schritte aufweist:
- Empfangen (X05) einer Übertragungsanforderung von einem Transaktionsverwaltungsserver (SrvG) durch das Kommunikationsendgerät (termC),
- Anzeigen (X10) einer Anfrage zum Eingeben eines persönlichen Identifikationscodes (PIN) durch das Kommunikationsendgerät (termC),
- Eingeben (X15) des persönlichen Identifikationscodes (PIN) durch den Benutzer und,
- wenn der persönliche Identifikationscode richtig ist, Übertragen (X20) der aktuellen Sprachsignatur (SVc) an den Verwaltungsserver (SrvG).

5. Server zum Überprüfen der Gültigkeit einer Transaktion, die die Fernbereitstellung per Telefon durch einen Benutzer von Daten, die auf einer Bankkarte enthalten sind, umfasst, wobei der Server aufweist:
- Mittel zum Erhalten von Daten, die auf der zu verwendenden Bankkarte (CB) enthalten sind, die Textdaten (DT) genannt werden,
- Mittel zum Erhalten von mindestens einem Abschnitt der Textdaten (DT) in Form von einem Audiodatenstrom, der Tonmuster (ES) genannt wird, der sich aus dem Auslesen der Daten ergibt, die auf der zu verwendenden Bankkarte (CB) enthalten sind,
- Mittel zum Berechnen einer aktuellen Sprachsignatur (SVc) ausgehend von dem Tonmuster (ES),
- Mittel zum Erhalten einer Telefonnummer, die für die Fernbereitstellung der Textdaten (DT) verwendet wird, die aktuelle Telefonnummer genannt wird,
- Mittel zum Vergleichen der aktuellen Sprachsignatur mit einer Referenz-Sprachsignatur, die zuvor aufgezeichnet ist und den Textdaten (DT) der Bankkarte zugeordnet ist, und,
- wenn sich die Referenz-Sprachsignatur (SVr) von der aktuellen Sprachsignatur um einen Wert unterscheidet, der größer als ein erster Wert ist, der durch einen vorbestimmten Parameter (PPd) definiert ist, Mittel zum Ablehnen der Transaktion,
- wenn sich die Referenz-Sprachsignatur (SVr) von der aktuellen Sprachsignatur (SVc) um einen Wert unterscheidet, der größer als ein zweiter Wert ist, der durch einen vorbestimmten Parameter (PPd) definiert ist:
- Mittel zum Vergleichen der aktuellen Telefonnummer mit mindestens einer Referenztelefonnummer, die zuvor aufgezeichnet ist und den Textdaten (DT) der Bankkarte zugeordnet ist, und,
- wenn die aktuelle Telefonnummer nicht mit mindestens einer der Referenztelefonnummern identisch ist, Mittel zum Ablehnen der Transaktion.

6. Computerprogrammprodukt, das von einem Kommunikationsnetz heruntergeladen werden kann und/oder auf einem computerlesbaren Medium aufgezeichnet ist und/oder von einem Mikroprozessor ausgeführt werden kann, wobei das Computerprogrammprodukt Programmcodeanweisungen für das Ausführen eines Kontrollverfahrens nach Anspruch 1 aufweist, wenn es auf einem Computer ausgeführt wird.

## Claims

1. Method for securing a transaction made by bank card, the transaction involving the remote provision, by a user, of data existing in a bank card in his possession, said method comprising:
- a step (10) for obtaining data existing in the bank card (CB) to be used, called textual data (DT);
- a step (20) for obtaining at least one portion of the textual data (DT) in the form of an audio data stream, called a sound sample (ES), resulting from the reading of the data existing in the bank card to be used (CB);
- a step (30) for computing a current voice signature from said sound sample (ES);
- a step of obtaining a telephone number used for remote delivering of said textual data (DT), called a current telephone number;
- a step (40) for comparing said current voice signature with a reference voice signature pre-recorded and associated with the textual data (DT) of the bank card; and
- when the reference voice signature (SVr) differs from the current voice signature (SVc) by a value greater than the first value defined by a predetermined parameter (PPd), a step (50) for rejecting the transaction;
- when the reference voice signature (SVr) differs from the current voice signature (SVc) by a value greater than a second value defined by the predetermined parameter (PPd):
- a step for comparing the current telephone number with at least one reference telephone number pre-recorded and associated with said textual data (DT) of the bank card; and
- when the current telephone number is not identical to one of the reference telephone numbers, a step for rejecting the transaction.

2. Method according to claim 1, **characterized in that** said step for obtaining said sound sample is implemented concomitantly with said step for obtaining said textual data when said textual data is communicated by telephone.

3. Method according to claims 1, **characterized in that** said step for obtaining said sound sample and said step for computing said current voice signature are implemented by means of a communications terminal (TermC) in the possession of said user

4. Method according to claim 3, **characterized in that** it comprises the following steps:
- reception (XO5), by the communications terminal (termC), of a request for transmission coming from a transaction management server (SrvG);
- display (X10), by the communications terminal of a request for entering a personal identification code (PIN);
- entry (X15), by the user, of the personal identification code (PIN), and
- when the personal identification code is correct, transmission (X20) of the current voice signature (SVc) to the management server (SrvG).

5. Server for controlling a validity of a transaction involving the remote providing, by a user, of data appearing in a bank card, said server comprising:
- means for obtaining data existing in the bank card to be used (CB), called textual data (DT);
- means for obtaining at least one portion of the textual data (DT), in the form of a stream of audio data, called a sound sample (ES), resulting from a reading of the data existing in the bank card to be used (CB);
- means for computing a current voice signature (SVc) from said sound sample (ES);
- means for obtaining a telephone number used for remote delivering of said textual data (DT), called a current telephone number;
- means for comparing said current voice signature with a reference voice signature pre-recorded and associated with said textual data (DT) bof the bank card; and
- when the reference voice signature (SVr) differs from the current voice signature by a value greater than a first value defined by a predetermined parameter (PPd), means for rejecting the transaction.
- when the reference voice signature (SVr) differs from the current voice signature (SVc) by a value greater than a second value defined by the predetermined parameter (PPd):
- means for comparing the current telephone number with at least one reference telephone number pre-recorded and associated with said textual data (DT) of the bank card; and
- when the current telephone number is not identical to one of the reference telephone numbers, means for rejecting the transaction.

6. Computer program product downloadable from a communications network and/or stored on a computer-readable carrier and/or executable by a microprocessor, said computer program product comprising program code instructions to execute a method of control according to claim 1.
